# EUROPÄISCHE PATENTANMELDUNG

(11) **EP 3 960 397 A1**
(43) Veröffentlichungstag der Anmeldung: **02.03.2022**
(21) Anmeldenummer: 21000214.3
(22) Anmeldetag: 06.08.2021
(51) Int. Cl.: B25J 15/00, B25J 15/02, B25J 15/06

(54) **GREIFERSYSTEM MIT PARALLELOGRAMMGETRIEBE**

(30) Priorität: 07.08.2020 DE 102020004812
(71) Anmelder: Zimmer, Günther Stephan, 77866 Rheinau (DE); Zimmer, Martin, 77866 Rheinau (DE)
(72) Erfinder: Zimmer, Günther Stephan, 77866 Rheinau (DE); Zimmer, Martin, 77866 Rheinau (DE)
(74) Vertreter: Thämer, Wolfgang

(57) **Zusammenfassung**

Die Erfindung betrifft ein Greifersystem mit einem Trägerteil und mit mindestens zwei relativ zueinander verstellbaren Greifbacken, wobei mindestens eine Greifbacke mittels eines Elektromotors, mindestens eines Wälzgetriebes und eines Parallelogrammgetriebes antreibbar ist, wobei das Parallelogrammgetriebe eine im Trägerteil in einem Antriebsschwenkgelenk gelagerte angetriebene Kurbel aufweist. Zumindest ein Wälzgetriebe hat eine Abtriebswelle, an der die Kurbel im Antriebsschwenkgelenk form- und/oder kraftschlüssig befestigt ist.

Mit der vorliegenden Erfindung wird ein Greifersystem mit hoher Positioniergenauigkeit bei großem Greiferhub entwickelt.

## Beschreibung

Die Erfindung betrifft ein Greifersystem mit einem Trägerteil und mit mindestens zwei relativ zueinander verstellbaren Greifbacken, wobei mindestens eine Greifbacke mittels eines Elektromotors, mindestens eines Wälzgetriebes und eines Parallelogrammgetriebes antreibbar ist, wobei das Parallelogrammgetriebe eine im Trägerteil in einem Antriebsschwenkgelenk gelagerte angetriebene Kurbel aufweist.

Aus der WO 2015/117 643 A1 ist ein derartiges Greifersystem bekannt, bei dem beide Greifbacken mittels eines gemeinsamen, linear verfahrbaren Aktuators antreibbar sind.

Der vorliegenden Erfindung liegt die Problemstellung zugrunde, ein Greifersystem mit hoher Positioniergenauigkeit bei großem Greiferhub zu entwickeln.

Diese Problemstellung wird mit den Merkmalen des Hauptanspruches gelöst. Dazu hat zumindest ein Wälzgetriebe eine Abtriebswelle, an der die Kurbel im Antriebsschwenkgelenk kraft- und/oder formschlüssig befestigt ist.

Die vorliegende Erfindung offenbart ein Greifersystem, dessen Antriebsstrang nur rotatorisch und schwenkbare bewegte Baugruppen aufweist. Der Greiferhub ist nicht durch Führungselemente begrenzt. Das Greifersystem kann damit bei kompakter Baugröße einen großen Hub erreichen. Weiterhin ermöglichen der weitgehend spielfreie Antriebsstrang und die Übersetzung des Wälzgetriebes eine hohe Dynamik und eine hohe Positioniergenauigkeit der Greifbacke. Damit ist auch eine Feinverstellung der Greifbacke möglich.

Weitere Einzelheiten der Erfindung ergeben sich aus den Unteransprüchen und der nachfolgenden Beschreibung schematisch dargestellter Ausführungsformen.
- Figur 1:: Greifersystem;
- Figur 2:: Greifersystem mit geöffneten Greifbacken;
- Figur 3:: Belagträger;
- Figur 4:: Kurbelhebel;
- Figur 5:: Schwingenhebel;
- Figur 6:: Schnittdarstellung des Greifersystems;
- Figur 7:: Sauggreifersystem;
- Figur 8:: Greifbacke mit Antrieb;
- Figur 9:: Elektromotor mit Schneckengetriebe.

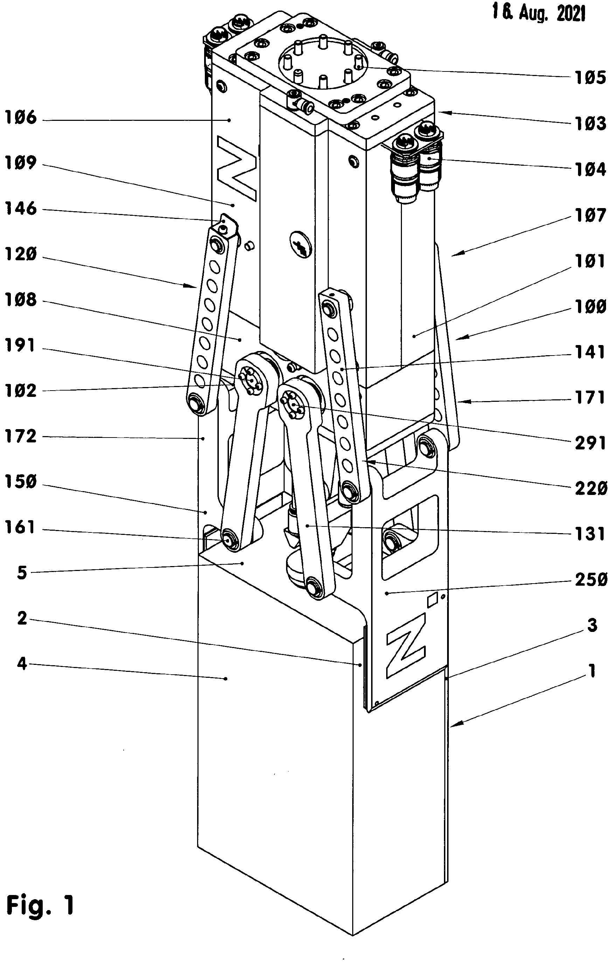

Die Figuren 1 - 9 zeigen ein Greifersystem (100) und einige seiner Einzelteile. Derartige Greifersysteme (100) werden eingesetzt, um z.B. als Stückgüter (1) ausgebildete Gegenstände (1) mit einander abgewandten Greifzonen (2) aufzunehmen und zu fördern. Die aufzunehmenden Gegenstände (1) können beispielsweise eine quaderförmige, zylindrische, oktogonale etc. Hüllkontur aufweisen. Im Ausführungsbeispiel ist der vom Greifersystem (100) gehaltene Gegenstand (1) ein Schuhkarton (1), der z.B. mit einem Paar Schuhe beladen sind. Die Stückgüter (1) können jedoch auch Werkstücke, in Transportpackungen verpackte Gegenstände, etc. sein.

Der dargestellte Schuhkarton (1) hat einen Deckel (3), der im Ausführungsbeispiel mit dem Grundteil (4) des Schuhkartons (1) verrastet ist. Die Masse des beladenen Schuhkartons (1) beträgt beispielsweise 1,5 Kilogramm. Der Schuhkarton wird z.B. in vertikaler Richtung gehalten. Das Greifersystem (100) hat ein Trägerteil (101) und zwei Greifbaken (150; 250). Es kann aber auch mehr als zwei Greifbacken (150; 250) aufweisen. Die Greifbacken (150; 250) sind im Ausführungsbeispiel jeweils mittels eines Parallelogrammgetriebes (120; 220) am Trägerteil (101) verstellbar gelagert.

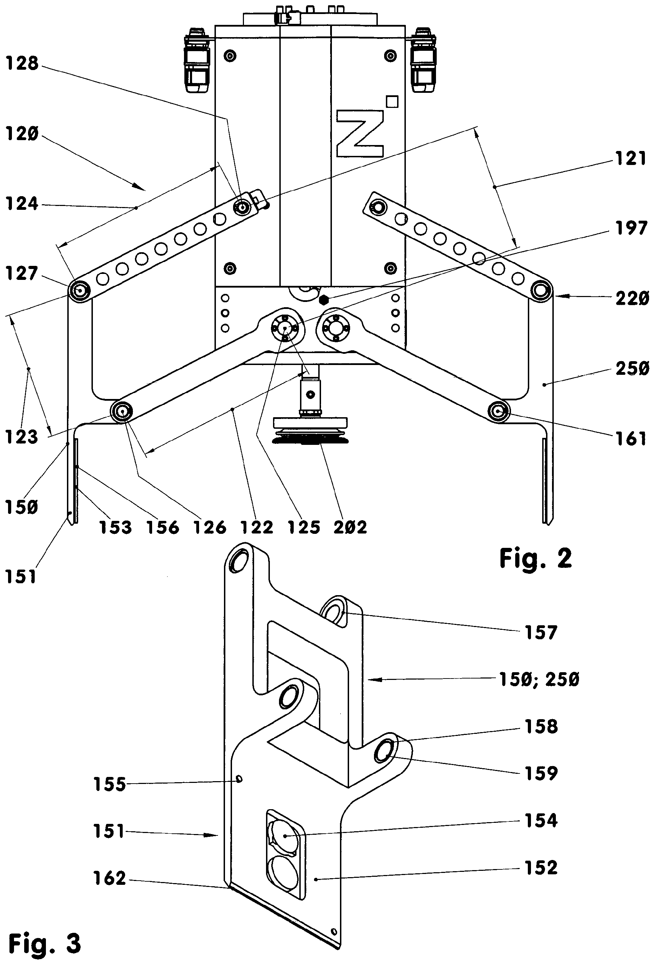

Die Figur 2 zeigt das Greifersystem (100) mit geöffneten Greifbacken (150; 250). Der Abstand der Greifbacken (100) zueinander beträgt in der Darstellung der Figur 2 beispielsweise das 2,5-fache des Abstandes der in der Figur 1 dargestellten Greifbacken (150; 250). Der vertikale Abstand der Mitte der Greifbacken (150; 250) zur Unterkante (102) des Trägerteils (101) beträgt in der Darstellung der Figur 2 55 % des entsprechenden Abstands der Darstellung der Figur 1. Zumindest die Darstellung der Figur 1 zeigt beispielsweise eine mittlere Lage des Greifersystems (100). Beispielsweise können bei einer geschlossenen Endlage des Greifersystems (100) beide Greifbacken (150; 250) aneinander anliegen. Bei einer offenen Endlage des Greifersystems (100) können die Mitten der Greifbacken (150; 250) oberhalb der Unterkante (102) des Trägerteils (101) liegen. Das Greifersystem (100) hat damit einen großen Hub. Entlang des gesamten Hubes behalten die Greifbacken (150; 250) ihre Ausrichtung relativ zum Trägerteil (101) bei. Im Ausführungsbeispiel sind sie parallel zu einer zwischen den Greifbacken (150; 250) liegenden Mittenlängsebene des Greifersystems (100) angeordnet. Der maximale Greiferhub beträgt beispielsweise 400 Millimeter. Die Masse des gesamten Greifersystems (100) beträgt z.B. 11 Kilogramm.

Das dargestellte Greifersystem (100) wird beispielsweise am Arm eines Industrieroboters angeordnet. Das Greifersystem (100) ist dann im Raum z.B. in drei lineare Achsen verfahrbar und beispielsweise in drei rotatorischen Achsen schwenkbar. Die Energie- und Signalversorgung des Greifersystems (100) erfolgt vom Roboter aus. Es ist auch denkbar, das Greifersystem (100) beispielsweise nur in den kartesischen Koordinaten verfahrbar z.B. an einem Gerüst anzuordnen.

Das Trägerteil (101) ist quaderförmig aufgebaut. In seinem Anschlussbereich (103) hat es elektrische und z.B. pneumatische Anschlüsse (104) sowie Befestigungsanschlüsse (105), um das Greifersystem (100) an den Arm des Industrieroboters anzuschließen.

Die einzelne Greifbacke (150; 250) hat einen Belagträger (151) und einen am Belagträger (151) befestigten Greifbelag (153). Der Greifbelag (153) kann beispielsweise kraft- und/oder formschlüssig am Belagträger (151) befestigt sein. Im Ausführungsbeispiel sind die Greifbeläge (153) mittels Magneten (154) an den Belagträgern (151) fixiert, vgl. Figur 3. Zwei Zentrierungen (155) sichern die Lage des einzelnen Greifbelags (153) relativ zum Belagträger (151). Zusätzlich können am Greifbelag (153) oder am Belagträger (151) Drucksensoren zur Überwachung des Anpressdrucks angeordnet sein. Die im Ausführungsbeispiel identisch ausgebildeten Greifbeläge (153) sind beispielsweise plattenförmig ausgebildet und haben ebene, zueinander zeigende Greifflächen (156). Im Ausführungsbeispiel sind die Greifbeläge (153) Gummiplatten. Es ist aber auch denkbar, die Greifflächen (156) mit Strukturen auszubilden. Die beiden Greifbeläge (153) können auch unterschiedliche Gestalten und/oder unterschiedlich strukturierte Greifflächen (156) haben. So kann beispielsweise das Greifersystem (100) an die Greifzonen (2) des aufzunehmenden Gegenstandes (1) angepasst sein.

Die Belagträger (151) haben im Ausführungsbeispiel jeweils eine ebene Trägerfläche (152) zur Aufnahme jeweils eines Greifbelags (153). Es ist aber auch denkbar, einen oder beide Belagträger (151) z.B. abgewinkelt auszubilden. So kann beispielsweise ein Gegenstand (1) mit dreieckiger Grundfläche aufgenommen werden. Die Belagträger (151) können austauschbar gestaltet sein. Auch eine Ausbildung der Greifbacken (150; 250) ohne Greifbelag (153) ist denkbar.

Der einzelne Belagträger (151) hat vier Lageraufnahmen (157, 158). Jeweils zwei dieser Lageraufnahmen (157; 158) fluchten miteinander. In jede der Lageraufnahmen (157, 158) ist eine Gleitbuchse (159) eingesetzt. Eine Verbindungsebene der Mittellinien der beiden Paare der Lageraufnahmen (157, 158) schließt mit der Ebene der Trägerfläche (152) beispielsweise einen Winkel von 20 Grad ein. Hierbei ist in den Darstellungen der Figuren 1 und 2 die Schnittlinie der beiden Ebenen die Mittellinie der oberen Lageraufnahmen (157) des Belagträgers (151). Die Trägerfläche (152) liegt jeweils außerhalb der Verbindungsebene. Bei montiertem Parallelogrammgetriebe (120; 220) ist in jeder der Lageraufnahmen (157, 158) ein Lagerbolzen (161) zur Bildung eines Gleitlagers angeordnet. Auch eine Ausführung mit Wälzlagern ist denkbar. Die Lagerstellen (125 - 128) sind weitgehend spielfrei gestaltet.

Im dargestellten Ausführungsbeispiel ist jede Greifbacke (150; 250) mittels jeweils eines Parallelogrammgetriebes (120; 220) relativ zur Trägerteil (101) verstellbar. Die beiden Parallelogrammgetriebe (120, 220) sind symmetrisch zu einer Mittenlängsebene der Greifersystems (100) ausgebildet. Es ist aber auch denkbar, eine der Greifbacken (150; 250) relativ zum Trägerteil (101) starr oder stufenweise verstellbar auszubilden. Auch können die Greifbacken (150; 250) mittels unterschiedlicher Getriebe ansteuerbar sein, wobei mindestens eines der Getriebe ein Parallelogrammgetriebe (120; 220) ist.

Das einzelne Parallelogrammgetriebe (120; 220) hat vier Getriebeglieder (121 - 124), die im Ausführungsbeispiel jeweils auf der Vorderseite (106) und auf der Rückseite (107) am Trägerteil (101) angeordnet sind. Es ist auch denkbar, das einzelne Parallelogrammgetriebe (120; 220) nur auf der Vorderseite (106) oder nur auf der Rückseite (107) des Trägerteils (101) zu lagern. Die einzelnen Getriebeglieder (121 - 124) sind zwei einander gegenüberliegende kurze Getriebeglieder (121, 123) und zwei einander gegenüberliegende lange Getriebeglieder (122, 124). In jeweils einem kurzen Getriebeglied (121; 123) sind zwei lange Getriebeglieder (122, 124) schwenkbar gelagert. In jedem langen Getriebeglied (122; 124) sind zwei kurze Getriebeglieder (121, 123) schwenkbar gelagert.

Die beiden kurzen Getriebeglieder (121, 123) haben die gleiche Länge. Auch die beiden langen Getriebeglieder (122, 124) haben eine zueinander identische Länge. Als Länge des einzelnen Getriebeglieds (121 - 124) ist hierbei der Mittenabstand der jeweiligen Lagerstellen (125, 126; 126, 127; 127, 128; 128, 125) bezeichnet. Im Ausführungsbeispiel beträgt die Länge der kurzen Getriebeglieder (121, 123) 71 % der Länge der langen Getriebeglieder (122, 124). Die Länge der kurzen Getriebeglieder (121, 123) kann zwischen 50 % und 80 % der Länge der langen Getriebeglieder (122, 124) betragen.

Die langen Getriebeglieder (122, 124) des Parallelogrammgetriebes (120; 220) sind eine Kurbel (122) und eine Schwinge (124). Die kurzen Getriebeglieder (121, 123) sind ein Gestell (121) und eine Koppel (123). Das Gestell (121) wird durch das Trägerteil (101) gebildet. Es ist das festgehaltene Getriebeglied. Im Trägerteil (101) sind die Kurbel (122) in einem Antriebsschwenkgelenk (125) und die Schwinge (124) schwenkbar gelagert. Hierbei ist die Kurbel (121) das angetriebene Getriebeglied (121). In den Darstellungen der Figuren 1 und 2 ist die Kurbel (121) das untenliegende Getriebeglied. Es ist aber auch denkbar, das Parallelogrammgetriebe (120; 220) von dem hier als Schwinge (124) bezeichneten Getriebeglied aus anzutreiben.

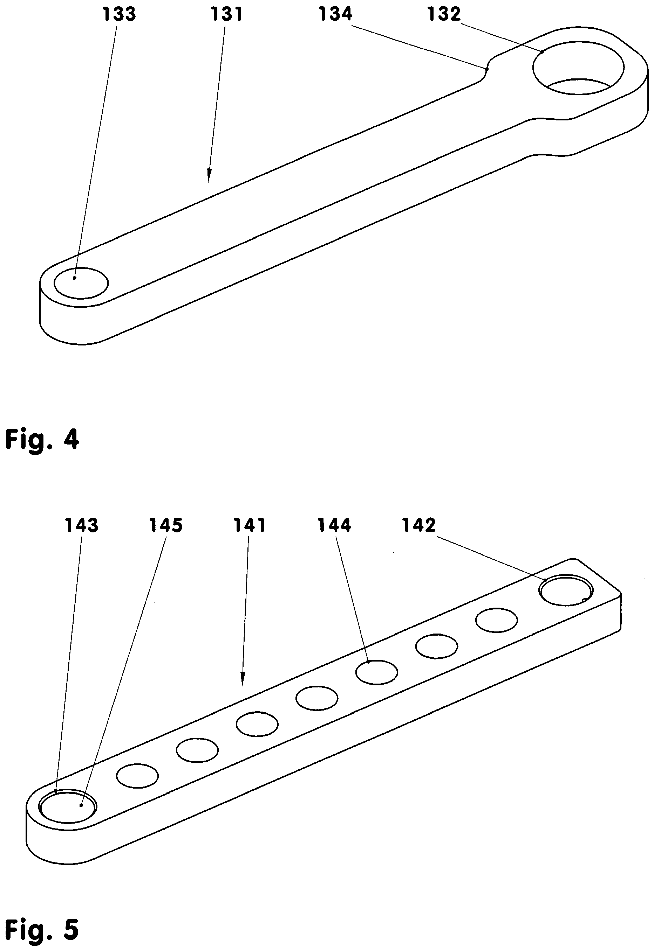

Die Figur 4 zeigt einen Kurbelhebel (131). Der Kurbelhebel (131) hat die Gestalt einer Pleuelstange. Er hat zwei Durchbrüche (132, 133), von denen ein Antriebszapfendurchbruch (132) in einem Pleuelabschnitt (134) des Kurbelhebels (131) angeordnet ist. Dieser Antriebszapfendurchbruch (132) ist als Durchgangsbohrung ausgebildet. Ein Schwenkzapfendurchbruch (133) ist am anderen Ende des Kurbelhebels (131) angeordnet. Der Durchmesser des Schwenkzapfendurchbruchs (133) beträgt beispielsweise 60 % des Durchmessers des Antriebszapfendurchbruchs (132). Der Mittenabstand des Antriebszapfendurchbruchs (132) und des Schwenkzapfendurchbruchs (133) wird als Länge der Kurbel (121) bezeichnet. Die Dicke des Kurbelhebels (131) verjüngt sich vom Antriebszapfendurchbruch (132) in Richtung des Schwenkzapfendurchbruchs (133). Gegebenenfalls kann der Kurbelhebel (131) entlang seines Körpers zusätzliche Einsenkungen und/oder Durchbrüche aufweisen.

In der Figur 5 ist ein Schwingenhebel (141) dargestellt. Der Schwingenhebel (141) hat einen Gestellzapfendurchbruch (142) und einen Koppelzapfendurchbruch (143). Im Ausführungsbeispiel ist der Durchmesser des Gestellzapfendurchbruchs (142) um 8 % größer als der Durchmesser des Koppelzapfendurchbruchs (143). Der Mittenabstand des Gestellzapfendurchbruchs (142) und des Koppelzapfendurchbruchs (143) ist die Länge der Schwinge (124). Beispielsweise ist der Schwingenhebel (141) an der Seite des Koppelzapfendurchbruchs (143) abgerundet ausgebildet. Zwischen dem Gestellzapfendurchbruch (142) und dem Koppelzapfendurchbruch (143) sind beispielsweise sieben Entlastungsdurchbrüche (144) angeordnet. Sowohl im Gestellzapfendurchbruch (142) als auch im Koppelzapfendurchbruch (143) sind im Ausführungsbeispiel Gleitlagerhülsen (145) eingesetzt. Die Lagerstellen (127) und (128) können auch mit Wälzlagern ausgebildet sein.

Die Länge der Koppel (123) ist der Mittenabstand der Lageraufnahmen (157, 158) der Greifbacke (150; 250), vgl. Figur 3. Die Koppel (123) wird durch den Belagträger (151) gebildet. Der Belagträger (151) ist z.B. in seinem unteren Bereich blechartig ausgebildet. Beispielsweise hat er eine untenliegende Schneide (162). Die Schneide (162) kann z.B. so ausgebildet sein, dass sie zur Trägerfläche (152) spitz zuläuft.

Im Ausführungsbeispiel verbinden der jeweilige Belagträger (151) und das Trägerteil (101) den hinteren Teil (171) und den vorderen Teil (172) des Parallelogrammgetriebes (120; 220). Es ist auch denkbar, dass der hintere und der vordere Teil des Kurbelhebels (131) und/oder des Schwingenhebels (141) bereichsweise miteinander verbunden sind. Diese Verbindung ist dann z.B. jeweils in dem an die Greifbacken (150; 250) angrenzenden Bereich ausgebildet.

Zwischen den beiden Greifbacken (150; 220)) ist im Ausführungsbeispiel ein Sauggreifersystem (200) angeordnet. Dieses umfasst einen Sauggreifer (201) mit einem Saugnapf (202), der in den Darstellungen der Figuren 1 und 2 nach unten aus dem Trägerteil (101) herausragt. Beispielsweise ist das Sauggreifersystem (200) mittig im Trägerteil (101) angeordnet. Der Sauggreifer (201) ist relativ zum Trägerteil (101) höhenverstellbar ausgebildet. An seinem dem Trägerteil (101) abgewandten Ende trägt der Sauggreifer (201) den Saugnapf (202). Die Geometrie des Saugnapfs (202) ist beispielsweise durch zwei Hauptachsen unterschiedlicher Länge bestimmt. Im Ausführungsbeispiel ist der Saugnapf (202) oval ausgebildet. Auch eine elliptische, annähernd rechteckige Ausbildung mit abgerundeten Ecken, etc. ist denkbar. Das Greifersystem (100) kann auch ohne ein Sauggreifersystem (200) ausgebildet sein.

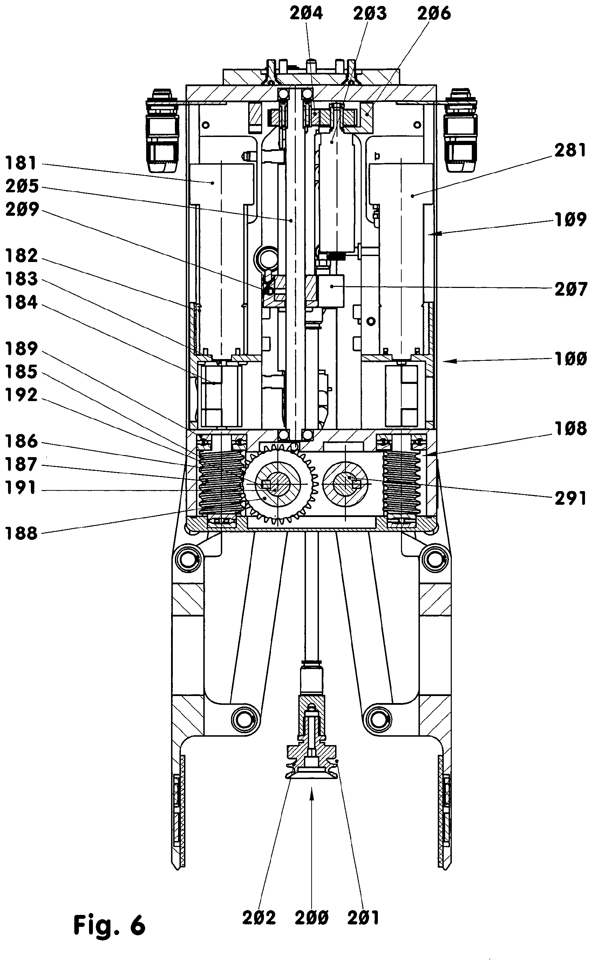

Die Figur 6 zeigt eine Schnittdarstellung des Greifersystems (100). Die Schnittebene ist eine Mittenlängsebene des Greifersystems (100), die die beiden Parallelogrammgetriebe (120; 220) schneidet. Das Trägerteil (101) hat einen Getriebekasten (108) und einen Motorraum (109). Im Motorraum (109) sind beispielsweise drei Elektromotoren (181, 281, 203) angeordnet. Die einzelnen Elektromotoren (181, 281, 203) sind z.B. Servomotoren (181, 281, 203) und haben einen Drehgeber. Ihre Systemspannung beträgt beispielsweise 24 Volt. Alle Elektromotoren (181, 281, 203) haben z.B. einen integrierten Antriebsregler. Dieser Antriebsregler überwacht und regelt beispielsweise die die Drehzahl, das Moment und den zurückgelegten Weg eines Umfangspunktes der Motorwelle. Die Elektromotoren (181; 281; 203) sind unabhängig voneinander ansteuerbar. Die beiden außenliegenden Elektromotoren (181, 281) treiben jeweils eine der Greifbacken (150; 250) mittels der Parallelogrammgetriebe (120; 220) an. Diese beiden Elektromotoren (181, 281) sind beispielsweise zueinander identisch aufgebaut. Sie sind im Folgenden als Greifbackenmotoren (181, 281) bezeichnet. Der mittlere Elektromotor (203) ist Teil des Sauggreifersystems (200). Dieser Sauggreifermotor (203) ist im Ausführungsbeispiel kleiner ausgebildet als die Greifbackenmotoren (181, 281).

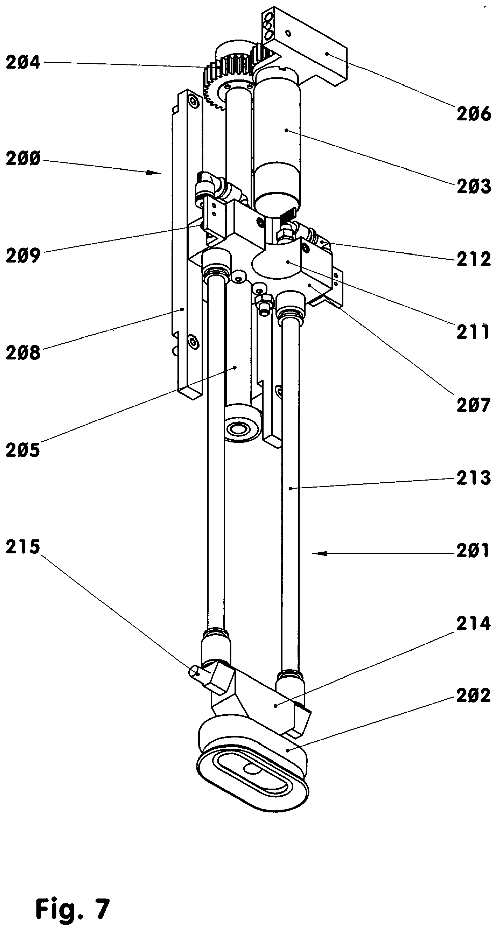

In der Figur 7 ist das Sauggreifersystem (200) dargestellt. Der Sauggreifermotor (203) treibt über ein Zahnradgetriebe (204) eine Gewindespindel (205) an. Der Sauggreifermotor (203) ist mittels einer Halterung (206) im Trägerteil (101) fixiert. Die Gewindespindel (205) ist beispielsweise eine zweigängige Trapezgewindespindel, eine Kugelgewindespindel, ein Schraubgewindetrieb, etc. Im Ausführungsbeispiel hat die Trapezgewindespindel einen Durchmesser von 12 Millimetern und eine Steigung von 6 Millimetern. Es ist auch denkbar, ein Gewinde mit geringerer Steigung einzusetzen. Beispielsweise kann der Spindeltrieb (205, 207) selbsthemmend ausgebildet sein. Die blockartig ausgebildete z.B. zweigängige Spindelmutter (207) ist im eingebauten Zustand entlang zweier Führungsleisten (208) geführt. Die einzelne Führungsleiste (208) ist beispielsweise eine Kunststoffleiste, die gleichzeitig als Verdrehsicherung der Spindelmutter (207) dient. An der Spindelmutter (207) ist ein Schmiernippel (209) angeordnet.

An ihrer den Führungsleisten (208) abgewandten Seite hat die Spindelmutter (207) eine Ausnehmung (211). In diese Ausnehmung (211) kann der Sauggreifermotor (203) beim Verfahren der Spindelmutter (207) eintauchen. Weiterhin hat die Spindelmutter (207) zwei Pneumatikanschlüsse (212). An der Spindelmutter (207) sind zwei starre Hubstangen (213) angeordnet. Beide Hubstangen (213) sind identisch ausgebildet und haben die gleiche Länge. Sie haben jeweils einen innenliegenden Pneumatikkanal. Jeder dieser Pneumatikkanäle ist mit einem Pneumatikanschluss (212) verbunden. Beide Hubstangen (213) münden in einen Sammler (214). An diesen Sammler (214) ist der Saugnapf (202) angeschlossen. Gegebenenfalls können an den Sammler (214) weitere Saugelemente angeschlossen sein. Der Saugnapf (202) kann austauschbar ausgebildet sein.

Beim montiertem Greifersystem (100) ist jeder der Pneumatikanschlüsse (212) der Spindelmutter (207) mit einem Pneumatikanschluss (104) des Trägerteils (101) verbunden. In jeder der Pneumatikleitungen wird der Druck erfasst. Liegt die Druckdifferenz der beiden Pneumatikleitungen oberhalb eines Schwellenwerts, wird eine Fehlermeldung ausgegeben. Ein Anschlag (215) begrenzt den Hub des Sauggreifersystems (200).

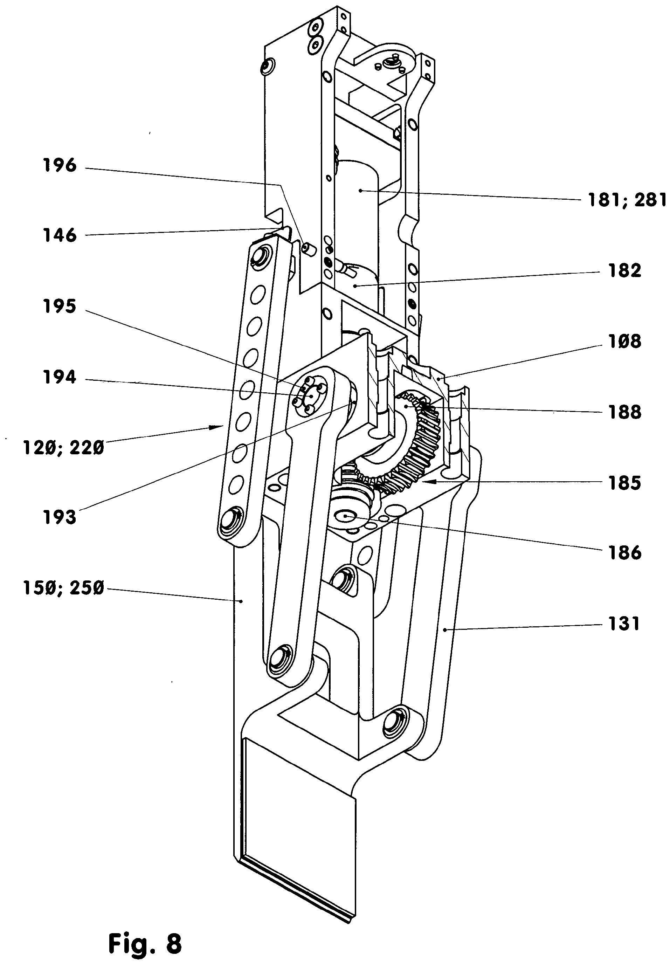

Die Figur 8 zeigt eine Greifbacke (150; 250) mit ihrem Antrieb. Der Greifbackenmotor (181; 281) ist im Trägerteil (101) befestigt. Er hat im Ausführungsbeispiel ein nachgeschaltetes Untersetzungsgetriebe (182). Das Untersetzungsgetriebe (182) ist beispielsweise ein Umlaufgetriebe in der Bauart eines Planetengetriebes. Es ist im Ausführungsbeispiel ein Zahnradgetriebe mit zueinander parallelen Achsen. Mittels dieses Untersetzungsgetriebes (182) wird die Motordrehzahl des Greifbackenmotors (181; 281) um den Übersetzungsfaktor verringert. Die Übersetzung des Untersetzungsgetriebes (182) ist beispielsweise größer als 10. Das Untersetzungsgetriebe (182) kann auch einen anderen Aufbau aufweisen.

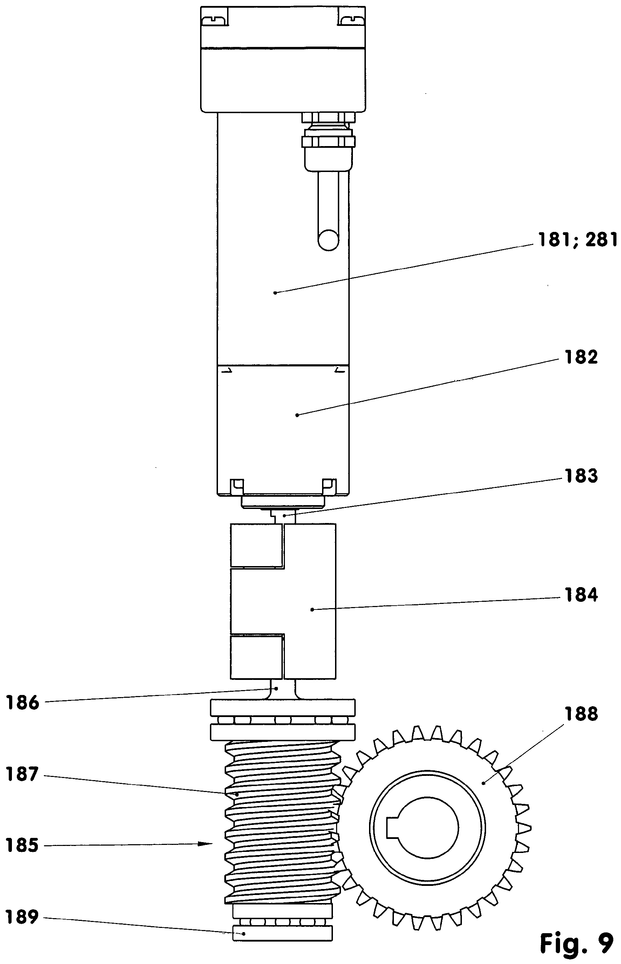

Am Getriebeausgang (183) des Untersetzungsgetriebes (182) ist mittels einer Wellenkupplung (184) ein weiteres Wälzgetriebe (185) angeschlossen, vgl. die Figuren 6 und 9. Die Wellenkupplung (184) ist eine nichtschaltbare drehsteife Ausgleichskupplung. Das der Wellenkupplung (184) nachgeschaltete Wälzgetriebe (185) ist als Umlenkgetriebe (185) ausgebildet und hat Räder (187, 188) mit sich kreuzenden Achsen. Im Ausführungsbeispiel ist dieses Umlenkgetriebe (185) ein Schneckengetriebe (185). Es ist aber auch denkbar, ein Kegelschraubradpaar oder ein Stirnschraubradpaar einzusetzen. Auch der Einsatz eines Wälzgetriebes mit sich schneidenden Achsen, z.B. eines Kegelradgetriebes, ist denkbar.

Das Schneckengetriebe (185) hat eine mit der Wellenkupplung (184) verbundene Schneckenwelle (186) und ein Schneckenrad (188). Die Schneckenwelle (186) ist im Getriebekasten (108) des Trägerteils (101) beispielsweise in zwei Axiallagern (189) gelagert. Die Schneckenwelle (186) trägt im Ausführungsbeispiel eine eingängige Schnecke (187). Der Steigungswinkel der Schnecke (187) beträgt beispielsweise 5 Grad. Die Schnecke (187) ist im Ausführungsbeispiel eine zylindrische Schnecke (187). Auch der Einsatz einer Globoidschnecke ist denkbar.

Das Schneckenrad (188) hat in der Darstellung der Figur 9 30 Zähne. Es ist als Globoidrad ausgebildet. Bei einer Ausbildung der Schnecke (187) als Globoidschnecke kann das Schneckenrad (188) auch als Stirnrad ausgebildet sein. Das Schneckenrad (188) sitzt z.B. formschlüssig auf einer Abtriebswelle (191; 291). Beispielsweise hat es eine Passfedernut (192) zur Aufnahme einer Passfeder einer Passfederverbindung. Auch eine andere Gestaltung der Wellen-Naben-Verbindung ist denkbar. Diese kann als Keilwellenverbindung, Polygonwellenverbindung, Zahnwellenverbindung, Kegelpressverbindung etc. ausgebildet sein. Gegebenenfalls ist auch der Einsatz eines Spannelements denkbar. Mittels des Schneckengetriebes (185) wird die Drehzahl der Schnecke um das Übersetzungsverhältnis des Schneckengetriebes ins Langsame übersetzt.

Die Abtriebswelle (191; 291) ist im Getriebekasten (108) in zwei Wälzlagern (193) gelagert. Im Ausführungsbeispiel sind diese Wälzlager (193) beidseitig abgedichtete Rillenkugellager. Diese sind Teil des Antriebsschwenkgelenks (125) des Parallelogrammgetriebes (120; 220). Aus dem Getriebekasten (108) ragt die Abtriebswelle (191; 291) beidseitig mit einem zylindrisch ausgebildeten Wellenende (194) heraus. Das verschlossene Getriebekasten (108) ist über einen Schmiernippel (197) schmierbar.

Auf jedem Wellenende (194) der Abtriebswelle (191; 291) ist mittels eines Spannelements (195) ein Kurbelhebel (131) fixiert. Das Spannelement (195) kann beispielsweise ein Ringkegel-Spannelement, eine Ringspann-Sternscheibe, eine Druckhülse, etc. sein. Das Wellenende (194) durchdringt hierbei den Antriebszapfendurchbruch (132) des Kurbelhebels (131). Die Kurbelhebel (131) an beiden Enden der Abtriebswelle (191; 291) sind parallel zueinander ausgerichtet. Bei Ausbildung der Wellen-Naben-Verbindung des Schneckenrads (188) mittels eines Spannelements können die Wellen-Naben-Verbindungen der Abtriebswelle (191; 291) und der Kurbelhebel (131) auch formschlüssig, z.B. als Vielzahnverbindung, Polygonverbindung, etc. ausgebildet sein.

Am Trägerteil (101) ist ein Schwenkanschlag (196) angeordnet. Dieser begrenzt zusammen mit einem am Schwingenhebel (141) angeordneten Anschlagbügel (146) den Öffnungshub des Greifsystems (100). Beispielsweise bilden diese Anschläge (146, 196) einen Referenzpunkt des Greifersystems (100).

Das Greifersystem (100) kann auch ohne das Untersetzungsgetriebe (182) oder ohne das Umlenkgetriebe (185) ausgebildet sein. Bei einer Ausführung ohne das Umlenkgetriebe (185) bildet der Getriebeausgang (183) des Untersetzungsgetriebes (182) die Abtriebswelle (183). Diese Abtriebswelle (183) des Untersetzungsgetriebes (182) ist dann form- und/oder kraftschlüssig mit dem Kurbelhebel (131) verbunden.

Das Greifersystem (100) ist so ausgebildet, dass alle Antriebsmotoren (181, 281, 203) mittels eines CAN-Bus ansprechbar sind. Beispielsweise wird nur ein CAN-Bus-Master und die Stromversorgung eingesetzt.

Beim Betrieb verfährt beispielsweise der Industrieroboter das Greifersystem (100) über einen Transportbehälter mit zu entnehmenden Schuhkartons (1). Die Greifbacken (150; 250) und der Saugnapf (202) zeigen nach unten. Die beiden Greifbacken (150; 250) werden aus einer Grundstellung geöffnet oder geschlossen, sodass ihr Abstand zueinander größer ist als die Greiflänge des Schuhkartons (1). Beispielsweise ist ihr Abstand zueinander um wenige Zentimeter größer als die Greiflänge des Schuhkartons (1).

Um die Greifbacken (150; 250) zu öffnen, werden beide Greifbackenmotoren (181, 281) gedreht. Die Drehrichtung wird so gewählt, dass in der Darstellung der Figur 2 die links dargestellte Abtriebswelle (191; 291) im Uhrzeigersinn dreht. Die rechts dargestellte Abtriebswelle (291; 191) dreht entgegen dem Uhrzeigersinn. Beide Parallelogrammgetriebe (120, 220) werden mittels der drehenden Abtriebswellen (191, 291) geschwenkt. Hierbei behalten die Koppel (123) und damit die Greifbacken (150; 251) ihre Winkellage im Raum. Das Greifbackenlagerstelle (126) wird auf einem Kreisbahnabschnitt um das Antriebsschwenkgelenk (125) bewegt. Die hohe Gesamtübersetzung der Wälzgetriebe (182, 185) bewirkt ein geringes, auf die Motorwelle des jeweiligen Greifbackenmotors (181; 281) reduziertes Trägheitsmoment des jeweiligen Parallelogrammgetriebes (120; 220). Der Greifbackenantrieb ist damit für hohe Beschleunigungen und Verzögerungen einsetzbar. Nach dem Abschalten der Greifbackenmotoren (181, 281) verharren die Greifbacken (150, 250) aufgrund der Selbsthemmung des Schneckengetriebes (185) in ihrer eingestellten Position.

Der Sauggreifer (201) wird aus einer Bereitschaftsposition ausgefahren. In der Bereitschaftsposition wird beispielsweise ein Referenzschalter, z.B. ein induktiver Sensor bedämpft. Zum Ausfahren des Sauggreifers (201) dreht der Sauggreifermotor (203) über das Zahnradgetriebe (204) die Gewindespindel (205). Die Spindelmutter (207) wird abgesenkt. Der starr mit der Spindelmutter (207) verbundene Saugnapf (202) wird ausgefahren. Beim oder nach dem Einschalten der Absaugung kann der Saugnapf (202) auf den Schuhkarton (1) aufsetzen. Die Absaugung kann mittels eines Absaugkreises, der durch beide Hubstangen (213) hindurch ansaugt oder mittels zweier paralleler Absaugkreise erfolgen.

Beim erneuten Anheben des Sauggreifers (201) - der Sauggreifermotor (203) dreht in die entgegengesetzte Richtung - wird der Schuhkarton (1) angehoben. Sobald der Saugnapf (202) z.B. oberhalb der Greifbacken (150, 250) steht, können die Greifbacken (150, 250) geschlossen werden. Sie legen sich mit den Greifbelägen (153) z.B. an den Deckel (3) und an den Boden des Schuhkartons (1) an. Gegebenenfalls kann der Sauggreifer (201) nun wieder entlastet werden. Er kann dann in seine Bereitschaftslage verfahren. Die symmetrische Anordnung der Greifbacken (150, 250) führt zu einer gleichmäßigen Belastung des Trägerteils (101) und des Handhabungsroboters. Beim Ablegen des Schuhkartons (1) werden die Greifbacken (150, 250) wieder geöffnet. Hierfür werden die Greifbackenmotoren (181, 281) in die entgegengesetzten Richtungen gedreht.

Es ist denkbar, bei einem Transport des Schuhkartons (1) allein mittels des Sauggreifers (201) die Greifbacken (150, 250) an der Stirnseite (5) des Schuhkartons (1) anzulegen. Die Greifbacken (150, 250) dienen dann der Abstützung des Schuhkartons (1).

Die schmalen Belagträger (151) können auch so positioniert werden, dass sie in die Zwischenräume zwischen zwei Schuhkartons (1) eintauchbar sind. Gegebenenfalls kann der Schuhkarton (1) dann auch allein mit den Greifbacken (150, 250) entnommen werden.

Auch bei einer Ausführung des Greifersystems (100) mit mehr als zwei Greifbacken (150, 250) ist mindestens eine der Greifbacken (150; 250) so ausgebildet und so angesteuert, wie oben beschrieben. Die anderen Greiferbacken (250; 150) können dann relativ zum Trägerteil (101) starr sein oder ebenfalls verstellbar ausgebildet sein.

Auch Kombinationen der einzelnen Ausführungsbeispiele sind denkbar.

### Bezugszeichenliste:

- 1: Gegenstand, Stückgut, Schuhkarton
- 2: Greifzonen
- 3: Deckel
- 4: Grundteil
- 5: Stirnseite

- 100: Greifersystem
- 101: Trägerteil
- 102: Unterkante
- 103: Anschlussbereich
- 104: elektrische und pneumatische Anschlüsse
- 105: Befestigungsanschlüsse
- 106: Vorderseite
- 107: Rückseite
- 108: Getriebekasten
- 109: Motorraum

- 120; 220: Parallelogrammgetriebe
- 121: Getriebeglied, Gestell, kurzes Getriebeglied
- 122: Getriebeglied, Kurbel, Langes Getriebeglied
- 123: Getriebeglied, Koppel, kurzes Getriebeglied
- 124: Getriebeglied, Schwinge, langes Getriebeglied
- 125: Lagerstelle an (121) und (122), Antriebsschwenkgelenk
- 126: Lagerstelle an (122) und (123), Greifbackenlagerstelle
- 127: Lagerstelle an (123) und (124)
- 128: Lagerstelle an (124) und (121)

- 131: Kurbelhebel
- 132: Durchbruch, Antriebszapfendurchbruch
- 133: Durchbruch, Schwenkzapfendurchbruch

- 134: Pleuelabschnitt

- 141: Schwingenhebel
- 142: Gestellzapfendurchbruch
- 143: Koppelzapfendurchbruch
- 144: Entlastungsdurchbrüche
- 145: Gleitlagerbuchsen
- 146: Anschlagbügel

- 150; 250: Greifbacken
- 151: Belagträger
- 152: Trägerfläche
- 153: Greifbelag
- 154: Magnete
- 155: Zentrierungen
- 156: Greifflächen
- 157: Lageraufnahme, oben
- 158: Lageraufnahme, unten
- 159: Gleitbuchse

- 161: Lagerbolzen
- 162: Schneide

- 171: hinterer Teil von (120; 220)
- 172: vorderer Teil von (120; 220)

- 181, 281: Elektromotor, Servomotor, Greifbackenmotoren
- 182: Untersetzungsgetriebe, Wälzgetriebe
- 183: Getriebeausgang, Abtriebswelle
- 184: Wellenkupplung
- 185: Wälzgetriebe, Umlenkgetriebe, Schneckengetriebe
- 186: Schneckenwelle
- 187: Wälzrad, Schnecke
- 188: Wälzrad, Schneckenrad

- 189: Axiallager

- 191, 291: Abtriebswelle
- 192: Passfedernut
- 193: Wälzlager
- 194: Wellenende
- 195: Spannelement
- 196: Schwenkanschlag
- 197: Schmiernippel

- 200: Sauggreifersystem
- 201: Sauggreifer
- 202: Saugnapf
- 203: Elektromotor, Servomotor, Sauggreifermotor
- 204: Zahnradgetriebe
- 205: Gewindespindel, Teil des Spindeltriebs
- 206: Halterung
- 207: Spindelmutter, Teil des Spindeltriebs
- 208: Führungsleiste
- 209: Schmiernippel

- 211: Ausnehmung
- 212: Pneumatikanschlüsse
- 213: Hubstangen
- 214: Sammler
- 215: Anschlag

## Patentansprüche

1. Greifersystem (100) mit einem Trägerteil (101) und mit mindestens zwei relativ zueinander verstellbaren Greifbacken (150, 250), wobei mindestens eine Greifbacke (150; 250) mittels eines Elektromotors (181; 281), mindestens eines Wälzgetriebes (182; 185) und eines Parallelogrammgetriebes (120; 220) antreibbar ist, wobei das Parallelogrammgetriebe (120; 220) eine im Trägerteil (101) in einem Antriebsschwenkgelenk (125) gelagerte angetriebene Kurbel (122) aufweist, **dadurch gekennzeichnet,**
**dass** zumindest ein Wälzgetriebe (182; 185) eine Abtriebsswelle (183; 191; 291) hat, an der die Kurbel (122) im Antriebsschwenkgelenk (125) kraft- und/oder formschlüssig befestigt ist.

2. Greifersystem (100) nach Anspruch 1, **dadurch gekennzeichnet, dass** jede der Greifbacken (150; 250) mittels jeweils eines Elektromotors (181; 182), mindestens eines Wälzgetriebes (182; 185) und eines Parallelogrammgetriebes (120; 220) antreibbar ist, wobei das jeweilige Parallelogrammgetriebe (120; 220) eine im Trägerteil (101) in einem Antriebsschwenkgelenk (125) gelagerte angetriebene Kurbel (122) aufweist und wobei jeweils zumindest ein Wälzgetriebe (182: 185) eine Abtriebswelle (183; 185) hat, an der die Kurbel (122) im jeweiligen Antriebsschwenkgelenk (125) kraft- und/oder formschlüssig befestigt ist.

3. Greifersystem (100) nach Anspruch 1, **dadurch gekennzeichnet, dass** der einzelne Elektromotor (181; 281) ein Servomotor (181; 281) ist.

4. Greifersystem (100) nach Anspruch 1, **dadurch gekennzeichnet, dass** das mit der Kurbel (122) verbundene Wälzgetriebe (185; 182) ein selbsthemmendes Getriebe ist.

5. Greifersystem (100) nach Anspruch 1, **dadurch gekennzeichnet, dass** die einzelne Greifbacke (150; 250) einen auswechselbaren Greifbelag (153) trägt.

6. Greifersystem (100) nach Anspruch 1, **dadurch gekennzeichnet, dass** im Parallelogrammgetriebe (120; 220) die Länge der kurzen Getriebeglieder (121, 123) zwischen 60 % und 80 % der Länge der langen Getriebeglieder (122, 124) beträgt, wobei ein langes Getriebeglied (122; 124) die Kurbel (122) bildet.

7. Greifersystem (100) nach Anspruch 1, **dadurch gekennzeichnet, dass** zumindest die Kurbel (122) und/oder eine zur Kurbel (122) parallele Schwinge (124) Entlastungsdurchbrüche (144) aufweist.

8. Greifersystem (100) nach Anspruch 1, **dadurch gekennzeichnet, dass** es ein relativ zum Trägerteil (101) höhenverstellbares Sauggreifersystem (200) umfasst, das zwischen den Greifbacken (150; 250) angeordnet ist.

9. Greifersystem (100) nach Anspruch 8, **dadurch gekennzeichnet, dass** das Sauggreifersystem (200) einen durch zwei Hauptachsen unterschiedlicher Länge bestimmten Saugnapf (202) hat.
